# EUROPEAN PATENT APPLICATION

(11) **EP 4 831 602 A1**
(43) Date of publication of application: **28.10.2026**
(21) Application number: 26170141.1
(22) Date of filing: 01.04.2026
(51) Int. Cl.: G01L 9/00, G01L 9/14, G01L 19/14

(54) **PRESSURE SENSOR**

(30) Priority: 24.04.2025 CN 202510525276
(71) Applicant: Illinois Tool Works Inc., Glenview IL 60025 (US)
(72) Inventor: LAI, Yong, Glenview, 60025 (US); BAI, Lijuan, Glenview, 60025 (US)
(74) Representative: HGF

(57) **Abstract**

The invention relates to a pressure sensor, comprising: a housing (2) comprising a first air cap (5) and a second air cap (4) mounted to each other; a pressure sensing part (6) which is clamped between the first air cap and the second air cap, and a chamber between the first air cap and the second air cap is divided into an upper chamber (21) and a lower chamber (22) by the pressure sensing part; a magnetic core assembly (7) which is carried above the pressure sensing part, and the magnetic core assembly moves relative to the housing according to the deformation of the pressure sensing part; a coil (8) which is arranged coaxially with said housing, and the inductance of said coil varies when the magnetic core assembly moves relative to said housing (2); and a printed circuit board (10) which is mounted on the first air cap, and both ends of the coil are electrically connected to the printed circuit board, and the printed circuit board outputs a signal according to a change in inductance of the coil, and the printed circuit board has a plurality of solder joints capable of surface mounting a capacitor and a plurality of contacts capable of electrically connecting with both a terminal and a capacitor.

## Description

### FIELD OF THE INVENTION

The present application relates to a sensor, in particular to a pressure sensor for detecting operating parameters of a household appliance.

### BACKGROUND

With the development of smart home technology and the ever-increasing performance demands placed on household appliances, home appliances such as washing machines now face higher requirements in terms of control precision, energy efficiency management, and intelligent operation. To achieve more accurate water level control, automatic detergent dispensing, energy-saving operation and other advanced functions, pressure sensors are finding increasingly widespread application in home appliances. However, existing pressure sensors still present considerable challenges in areas such as miniaturization, ease of installation, cost control, and environmental adaptability and the like.

Particularly in space-constrained applications such as washing machines, sensors must not only be compact and easy to integrate, but must also deliver good accuracy and long-term stability to ensure the reliability and safety of machine operation. At the same time, the market urgently calls for a universal sensor solution with strong compatibility that can be adapted to a wide range of home appliance models, so as to reduce the complexity of design and production for an overall machine and lower manufacturing costs.

Therefore, in the field of home appliances, there is an urgent need for a pressure sensor that satisfies the trend of miniaturization while also offering high precision, good reliability, ease of installation, and reduced cost, in order to better align with actual market demands and promote home appliances toward greater intelligence, integration, and high performance.

### SUMMARY

In a first aspect of the invention, a pressure sensor is provided which satisfies the trend of miniaturization while also offering high precision, good reliability, ease of installation, and reduced cost. The pressure sensor includes:
a housing which comprises a first air cap and a second air cap mounted to each other;
a pressure sensing part which is clamped between the first air cap and the second air cap, and a chamber between the first air cap and the second air cap is divided into an upper chamber and a lower chamber by the pressure sensing part;
a magnetic core assembly which is carried above the pressure sensing part, and the magnetic core assembly moves relative to the housing based on the deformation of the pressure sensing part;
a coil which is arranged coaxially with said housing, and the inductance of said coil varies when the magnetic core assembly moves relative to said housing; and
a printed circuit board which is mounted on the first air cap, and both ends of the coil are electrically connected to the printed circuit board, and the printed circuit board outputs a signal according to a change in inductance of the coil, and the printed circuit board has a plurality of solder joints capable of surface mounting a capacitor and a plurality of contacts capable of electrically connecting with both a terminal and a capacitor.

In another aspect according to the present application, the printed circuit board comprises two capacitors forming part of an oscillating circuit and three terminals, and the three terminals are used for outputting signals.

In another aspect according to the present application, the printed circuit board includes a printed circuit board body extending in a length direction, and the printed circuit board body includes first and second ear portions at both ends, and the first and second ear portions are electrically connected to the coil respectively.

In another aspect according to the present application, the printed circuit board body comprises a first contact and a second contact electrically connected to the first ear portion and the second ear portion respectively, and a third contact which is located between the first contact and the second contact, and a first solder joint and a second solder joint extend from the first contact and the third contact respectively towards each other but are not electrically connected, and a third solder joint and a fourth solder joint extend from the second contact and the third contact respectively towards each other but are not electrically connected.

In another aspect according to the present application, the first solder joint and the second solder joint are SMT soldered to two pins of the SMD capacitor respectively, and the third solder joint and the fourth solder joint are SMT soldered to two pins of the SMD capacitor respectively.

In another aspect according to the present application, each terminal has a structure in serpentine shape including a relatively long horizontally extending terminal output portion, a vertical transition portion, a horizontally extending terminal connecting portion at the maximum height, and a terminal mounting portion extending vertically downward from one end of the terminal connecting portion.

In another aspect according to the present application, the printed circuit board body further comprises a groove on a lateral side, and the groove is used for receiving a terminal mounting portion of the terminal.

In another aspect according to the present application, a horizontal distance between the terminal mounting portion and a vertical transition portion of the terminal is slightly larger than a lateral width of the printed circuit board body at the groove.

In another aspect according to the present application, a through hole is provided at the terminal connection portion, and the through hole extends through the terminal connection portion and through a portion of the terminal mounting portion, and the terminal is capable of receiving a pin of the capacitor at the through hole and being soldered together with the pin to a contact of the printed circuit board body.

In another aspect according to the present application, a mounting seat is provided on the first air cap for mounting the printed circuit board thereon, and the terminal mounting portion is provided with a narrowing portion, and the narrowing portion is able to be received in a complementary shaped lateral projection of the mounting seat.

In another aspect according to the present application, the mounting seat includes a wall portion and a catching mechanism extending vertically upward from an upper surface thereof and disposed opposite to each other, and a distance between the wall portion and the catching mechanism is slightly larger than a width of the printed circuit board body.

In another aspect according to the present application, the catching mechanism is provided at its upper end with a catching portion projecting towards the wall portion.

In another aspect according to the present application, the plurality of solder joints and a plurality of contacts are provided on the same surface of the printed circuit board; or
the plurality of solder joints are disposed on one surface of the printed circuit board, and the plurality of contacts are disposed on an opposite surface of the printed circuit board.

In another aspect according to the present application, the magnetic core assembly includes:
a magnetic core holder, and the magnetic core holder includes a supporting disc and an intermediate sleeve extending axially from the supporting disc, and the center of the intermediate sleeve is configured with a receiving portion, and the intermediate sleeve includes a sleeve end at an end distal from the supporting disc, and the intermediate sleeve is configured with an indented portion at an outer peripheral wall of the intermediate sleeve near the sleeve end;
a magnetic core cap, and the magnetic core cap has a lower section at the lower side, and the lower section is inserted into the receiving portion, and the center of the magnetic core cap is configured with a central hole opening upwards, and the inner peripheral wall of the central hole is configured with a glue flowing groove extending axially, and the glue flowing groove has a radial opening, and the central hole is in communication with the outer side of the magnetic core cap via the radial opening; and
a magnetic core, and the magnetic core is fitted over the outside of said magnetic core cap and said magnetic core holder;
wherein a radial gap is formed between the lower section and the receiving portion, and a gap is formed between the sleeve end and the magnetic core cap in the axial direction, and a radial gap is formed between the indented portion and the magnetic core.

In another aspect according to the present application, the core holder further includes a coupling sleeve;
wherein the center of the pressure sensing part is configured with a carrier, and the center of the carrier is configured with a recess opening upwards, and the carrier is resilient;
wherein the coupling sleeve has a radially outwardly projecting shoulder at the lower end, and the coupling sleeve together with the shoulder is mounted in the groove in a form-fitting manner, and the supporting disc is supported on the carrier.

In another aspect according to the present application, a projection is provided in the centre of the recess, and the projection is inserted in a centering hole in the centre of the bottom of the shoulder.

The above summary is not intended to represent each embodiment, or every aspect, of the present disclosure. Rather, the foregoing summary merely provides an exemplification of some of the novel concepts and features set forth herein. The above features and advantages, and other features and attendant advantages of the present disclosure will be readily apparent from the following detailed description of the illustrative examples and representative modes for carrying out the present disclosure when taken in connection with the accompanying drawings and appended claims.

### BRIEF DESCRIPTION OF THE FIGURES

The present disclosure will become more fully understood from the detailed description and the accompanying drawings.
FIG. 1 illustrates a perspective view of a pressure sensor according to one embodiment of the present invention;
FIG. 2 illustrates a cross-sectional view of the pressure sensor in accordance with one embodiment of the present invention of FIG. 1;
FIG. 3 illustrates an enlarged partial view of a cross-sectional view of the pressure sensor in accordance with one embodiment of the present invention as shown in FIG. 2;
FIG. 4 illustrates a perspective view of a portion of a pressure sensor in accordance with one embodiment of the present invention, showing a printed circuit board mounted on a first air cap of a housing of the pressure sensor;
FIG. 5 illustrates a schematic perspective view of a coil of a pressure sensor according to one embodiment of the invention;
FIG. 6 illustrates a schematic circuit diagram of a printed circuit board of a pressure sensor according to one embodiment of the present invention;
FIG. 7 illustrates a perspective view of a printed circuit board of a pressure sensor according to one embodiment of the present invention;
FIG. 8 illustrates a perspective view of a printed circuit board body of a printed circuit board of a pressure sensor in accordance with one embodiment of the present invention;
FIG. 9 illustrates a perspective view of one terminal of the printed circuit board of the pressure sensor according to one embodiment of the present invention;
FIG. 10 illustrates a perspective view of a printed circuit board of a pressure sensor according to another embodiment of the invention;
FIG. 11 illustrates a cross-sectional view of the printed circuit board of the pressure sensor according to another embodiment of the invention along the line I-I as shown in FIG. 10;
FIG. 12 illustrates a perspective view of an alternative terminal of a printed circuit board of a pressure sensor according to another embodiment of the invention;
FIG. 13 illustrates a perspective view of an alternative terminal of a printed circuit board of a pressure sensor according to yet another embodiment of the present invention;
FIG. 14 illustrates perspective views, cross-sectional views, plan views of various components of a magnetic core assembly of a pressure sensor in accordance with one embodiment of the present invention; and
FIG. 15 illustrates a cross-sectional view and a partially enlarged cross-sectional view of a magnetic core assembly and a pressure sensing component of a pressure sensor in accordance with one embodiment of the present invention.

In the different figures, like or same components are denoted by like or same reference numerals, and the figures are for illustrative purposes only and the parts in the figures are not necessarily drawn to scale.

### DETAILED DESCRIPTION

The following description is merely exemplary in nature and is not intended to limit the present disclosure, application, or uses. The present disclosure is susceptible of embodiments in many forms. Representative examples of the present disclosure are illustrated in the accompanying drawings and will be described herein in detail. It should be understood that the present disclosure is to be considered as examples of the principles of the disclosure and is not intended to limit the broad aspect of the disclosure. Furthermore, the drawings are generally schematic and not necessarily drawn to scale. Some features may be exaggerated or minimized to show details of particular components. Therefore, specific structural and functional details disclosed herein are not to be interpreted as limiting, but merely as a representative basis for teaching one skilled in the art to variously employ the present disclosure. In this regard, elements and limitations that are described, for example, in the abstract, background, brief summary, figures, and detailed description section, but not explicitly recited in the claims, should not be incorporated into the claims by implication, inference, or otherwise, either individually or collectively.

Certain terms may be used in the following description for reference purposes only and are therefore not intended to be limiting. For example, terms such as "above" and "below" refer to directions in the drawings to which reference is made. Terms such as "front", "rear", "left", "right", "rear", "side", "upward", "downward", "top" and "bottom" describe the orientations and/or positions of portions of a component or element within a consistent but arbitrary reference as made clear by reference to the text and the associated drawings describing the component or element as discussed.

Moreover, terms such as "first", "second", "third" and the like may be used to describe individual components. Such terms are used to describe the drawings and do not represent limitations on the scope of the disclosure, which is defined by the appended claims. Furthermore, the teachings may be described herein in terms of functional and/or logical block components and/or various processing steps.

For purposes of this detailed description, the singular includes the plural and vice versa, unless specifically stated otherwise; the words "and" and "or" shall be both conjunctions and disjunctions. The words "any" and "all" shall mean "any and all". The words "including", "comprising", "having" and the like, shall mean "including, but not limited to". Moreover, approximating language, such as "about", "nearly", "substantially", "approximately", "about", etc., may each be used herein, for example, in the sense of "being at, near, or nearly at", or "within 0% -5% of ......", or "within acceptable manufacturing tolerances", or any logical combination thereof.

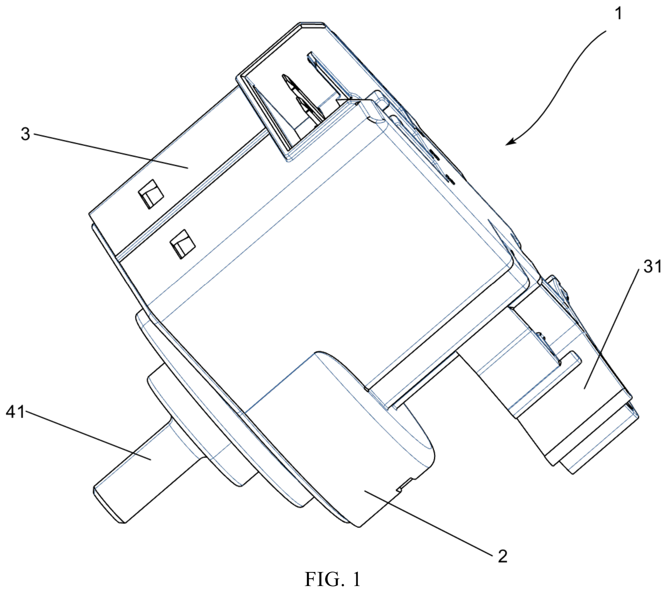

FIG. 1 illustrates a perspective view of a pressure sensor according to one embodiment of the present invention. As shown in fig. 1, the pressure sensor 1 includes a housing 2 and a can-shaped cover 3 fitted over the housing 2. A connecting structure 31 is provided on the peripheral side of the can-shaped cover 3. By means of the connecting structure 31, the pressure sensor 1 is fixed, for example, to a washing machine (not shown). The peripheral side of the can-shaped cover 3 is also provided with signal connectors (not shown) which are electrically connected to terminals of the printed circuit board for transmitting signals generated by the sensors to a control device (not shown) of the washing machine. The bottom of the housing 2 is provided with a communication passage 41 through which the liquid to be measured in the washing machine is in communication with the inside of the housing 2.

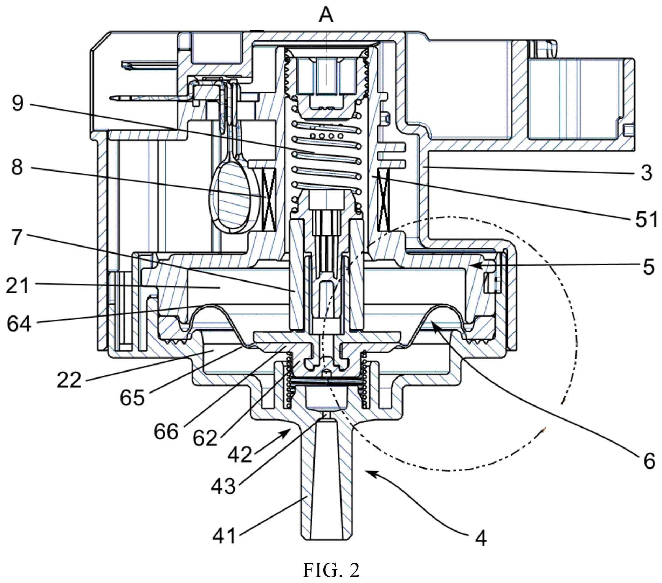

Fig. 2 illustrates a sectional view of the pressure sensor 1 in fig. 1. As shown in fig. 2, the housing 2 of the pressure sensor 1 consists of a first air cap 5 on the upper side and a second air cap 4 on the lower side. In the assembled state, a chamber is formed between the first air cap 5 and the second air cap 4, and a pressure sensing part 6 is mounted in the chamber. The pressure sensing part 6 is disposed between the first air cap 5 and the second air cap 4. The outer periphery of the pressure sensing part 6 is provided with a closing edge 61 extending in a circumferential direction of the pressure sensing part 6. The closing edge 61 seals the above-mentioned chamber against the surroundings of the housing 2 in the assembled state. In addition, the closing edge 61 divides the chamber between the first air cap 5 and the second air cap 4 into an upper chamber 21 and a lower chamber 22.

The first air cap 5 is substantially bowl-shaped, the bowl-shaped first air cap 5 having an upwardly extending sleeve 51. The second air cap 4 is also substantially bowl-shaped, and the bottom 42 of the bowl-shaped second air cap 4 is configured with a fluid passage 43 in fluid communication with the communication passage 41. The first air cap 5 and the second air cap 4 are combined with each other in a sealing manner by means of a closing edge 61 of the pressure sensing part 6 interposed therebetween.

An opening (not shown) is provided in the first air cap 5 to allow the upper chamber 21 to communicate with the atmosphere. The lower chamber 22 communicates with a tub (not shown) of the washing machine via the communication passage 41. When the liquid level in the tub of the washing machine changes, the air pressure in the lower chamber 22 also changes, and the pressure sensing part 6 is deformed by the pressure difference between the upper chamber 21 and the lower chamber 22.

According to an embodiment of the invention, the pressure sensing part 6 has a carrier 62, a diaphragm 63 arranged around the carrier 62, and a closing edge 61. The carrier 62 has a central disc 66. The diaphragm 63 extends outwardly from a disc edge 65 of a central disc 66 of carrier 62 to form an arcuate portion 64. The pressure sensing part 6 further comprises the above-mentioned closing edge 61 extending around the diaphragm 63, the closing edge 61 being clamped between the first air cap 5 and the second air cap 4, thereby hermetically separating the upper chamber 21 from the lower chamber 22. The central disc 66 of the carrier 62 and the closing edge 61 press against the diaphragm 63 so that the diaphragm 63 bows upwardly between the disc edge 65 of carrier 62 and the inside of closing edge 61,thereby forming the arcuate portion 64. In a preferred embodiment, the pressure sensing part 6 is formed in one piece.

The pressure sensor 1 also includes a magnetic core assembly 7 and a coil 8, which together form a variable inductance sensor. The magnetic core assembly 7 has a magnetic core holder, a magnetic core cap and a magnetic core made of a ferromagnetic material. The magnetic core assembly 7 is mounted in the housing 2 and can move relative to the housing 2 according to the deformation of the pressure sensing part 6. In one embodiment, the coil 8 is disposed coaxially with the housing 2, and when the magnetic core assembly 7 moves relative to the housing 2, the magnetic core of the magnetic core assembly 7 moves into and out of a space defined by the coil 8, resulting in a change in the inductance of the coil 8. In one embodiment of the present application, the coil 8 is wound on the outside of the sleeve 51 of the first air cap 5.

The magnetic core assembly 7 is carried above the carrier 62 of the pressure sensing part 6. As the pressure sensing part 6 deforms, the magnetic core assembly 7 moves relative to the housing 2 accordingly, thereby the magnetic core assembly 7 together with the coil 8 wound on the outside of the sleeve 51 of the first air cap 5 forming a variable inductance sensor.

In operation, if the liquid level rises, the air pressure in the lower chamber 22 gradually increases, so that the pressure sensing part 6 suffers an upward pressure, and the diaphragm 63 moves upwards, and the magnetic core assembly 7 is brought to raise up. When the magnetic core assembly 7 is raised, the first spring 9 is compressed. As the liquid level drops, the air pressure in the lower chamber 22 decreases and the first spring 9 recovers, so that the magnetic core assembly 7 returns to the initial position.

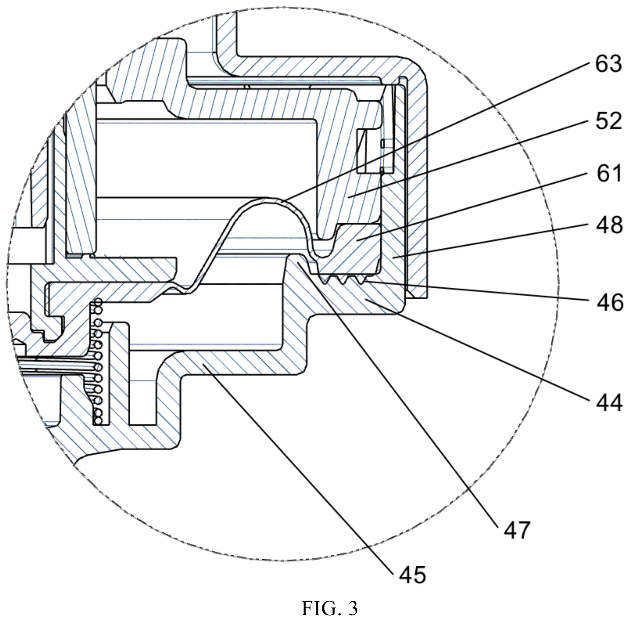

FIG. 3 illustrates an enlarged partial view of a cross-sectional view of the pressure sensor in accordance with one embodiment of the present invention as shown in FIG. 2. As shown in fig. 3, the second air cap 4 has a two-step structure including a (first) step 44 adjacent to the first air cap 5 and a second step 45 which is spaced apart from the step 44 in a direction away from the first air cap 5 and extends radially inward. The upper surface of the step 44 forms an abutment surface 46 for laying the closing edge 61 of the pressure sensing part 6. In a preferred embodiment, a flange 47 projecting substantially upwards in the axial direction A is formed at the inner periphery of the step 44, and the flange 47 is located below the diaphragm 63 of the pressure sensing part 6 in the mounted state. The purpose of the flange 47 is to provide support for the diaphragm 63 of the pressure sensing part 6 to prevent collapse of the arcuate portion of the diaphragm 63 when the pressure in the lower chamber 22 is too low. In an alternative embodiment, it is also possible to provide the pressure sensing part 6 with a higher rigidity, and in the mounted state, the diaphragm 63 itself of such a pressure sensing part 6 with a high rigidity can maintain the arching state, so that the flange 47 at the inner periphery of the step 44 can be omitted. The material that satisfies such high stiffness requirements can be selected from known materials, such as rubber with sufficient stiffness.

In a preferred embodiment of the invention, the abutment surface 46 of the step 44 and the longitudinal section of the closing edge 61 of the pressure sensing part 6 are formed as mutually cooperating undulations or saw-teeth, whereby a better sealing effect can be obtained with a labyrinth-like structure.

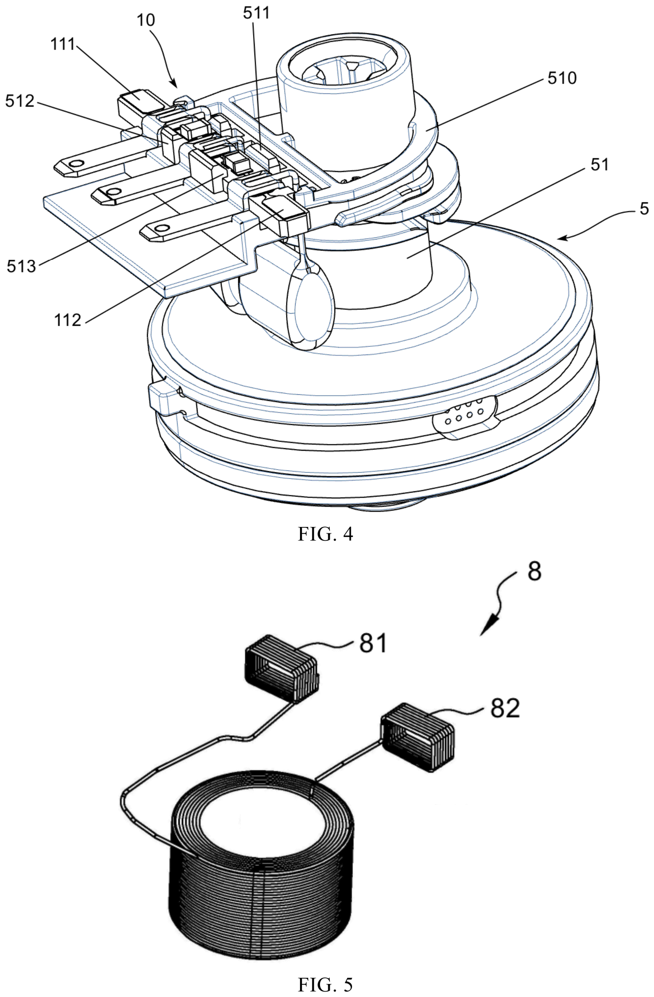

Fig. 4 illustrates a perspective view of a portion of the pressure sensor 1 according to an embodiment of the invention, showing the printed circuit board 10 mounted on the first air cap 5 of the housing 2 of the pressure sensor 1. Fig. 5 illustrates a schematic perspective view of the coil 8 of the pressure sensor 1 according to one embodiment of the invention. The signal output section of the pressure sensor 1 includes a printed circuit board 10, and the printed circuit board 10 is disposed between the housing 2 and the can-shaped cover 3, the printed circuit board 10 being substantially rectangular in shape. As shown in fig. 4, the sleeve 51 of the first air cap 5 is provided with a mounting seat 510. The printed circuit board 10 is mounted on the mounting seat 510 of the first air cap 5. The mounting seat 510 is located above the coil 8 (not shown in fig. 4) wound on the sleeve 51. Neither the mounting seat 510 nor the printed circuit board 10 covers the top of the sleeve 51. The printed circuit board 10 is provided with a first ear portion 111 and a second ear portion 112 at opposite ends. Both ends 81 and 82 of the coil 8 are wound on the first ear portion 111 and the second ear portion 112, respectively, so that the coil 8 is electrically connected with the printed circuit board 10.

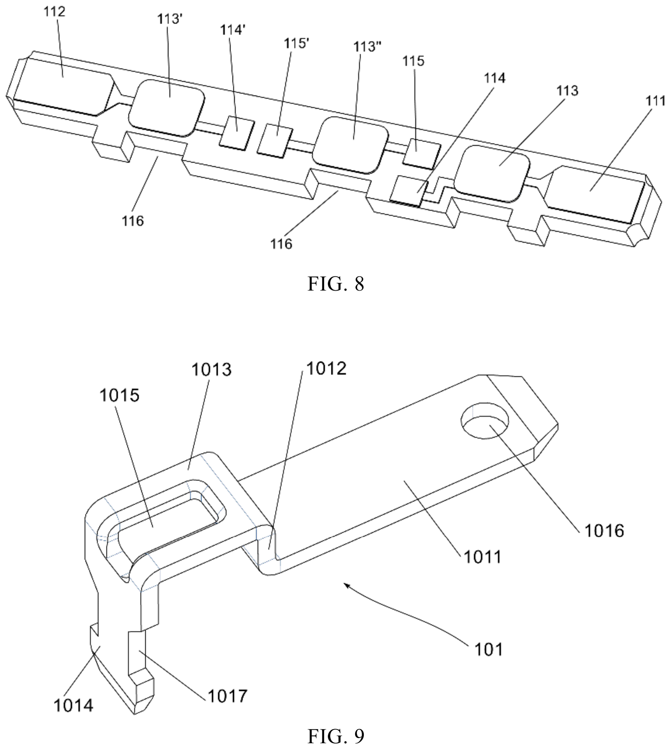

As shown in fig. 4, the mounting seat 510 has a wall portion 511 extending vertically upward from a horizontal upper surface thereof. In one embodiment of the present invention, the wall portion 511 is a wall portion that is discontinuous in the length direction. In one embodiment of the present invention, the mounting seat 510 further has a catching mechanism 512 extending vertically upward from the horizontal upper surface thereof and disposed opposite to the wall portion 511. The distance between the wall portion 511 and the catching mechanism 512 is slightly larger than the width of the printed circuit board 10 (more specifically, of the printed circuit board body 110, as shown in fig. 8) to help the printed circuit board 10 to be firmly received in the mounting seat 510. In one embodiment of the present invention, the catching mechanism 512 is provided at an upper end thereof with a catching portion 513 protruding toward the wall portion 511 to help prevent the printed circuit board 10 from leaving the mounting seat 510 after the printed circuit board 10 is mounted on the mounting seat 510.

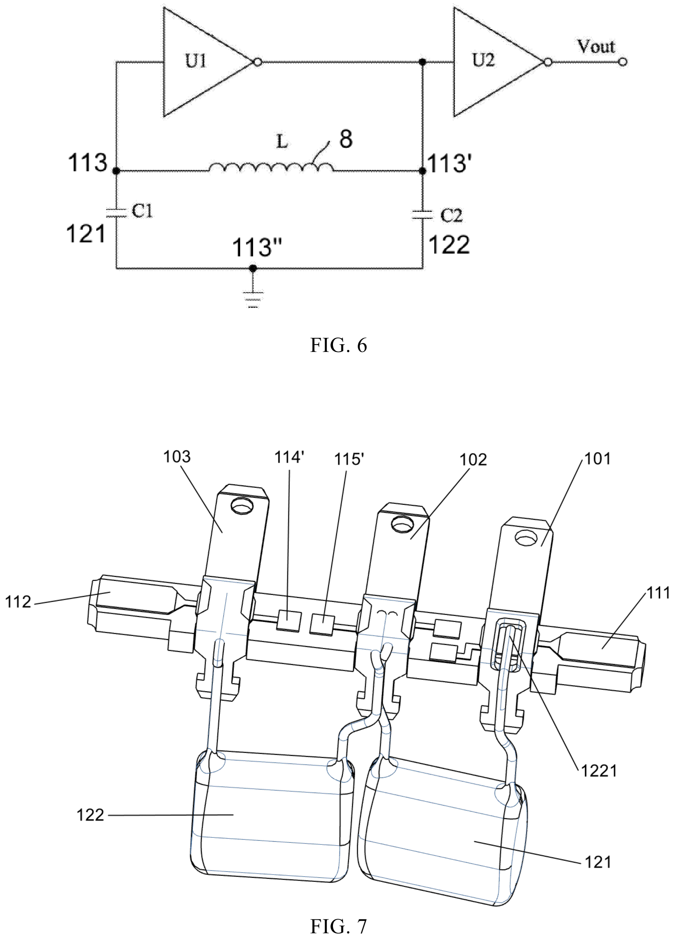

Fig. 6 illustrates a schematic circuit diagram of the printed circuit board 10 of the pressure sensor 1 according to one embodiment of the present invention. The printed circuit board 10 is further provided with capacitors 121 and 122. In one embodiment of the invention, the capacitors 121 and 122 together with the coil 8 form an oscillating circuit (i.e. a variable frequency oscillator). When the magnetic core assembly 7 moves up and down to affect the inductance of the coil 8, the oscillating circuit is capable of generating a linearly varying frequency signal based on the varying inductance of the coil 8.

During the operation of the household appliance, such as a washing machine, as the height of the liquid level (or water level) to be measured changes, i.e., the pressure of the fluid to be measured changes, the diaphragm 63 deforms, and the magnetic core assembly 7 can move up and down, and thus move into and out the sleeve 51 of the first air cap 5. The coil 8 generates a certain amount of inductance depending on the amount in which the magnetic core assembly 7 enters a space defined by the coil 8 outside the sleeve 51. The oscillating circuit then generates a linearly varying frequency signal in accordance with the varying inductance of the coil 8 and transmits the frequency signal to a control system of the household appliance.

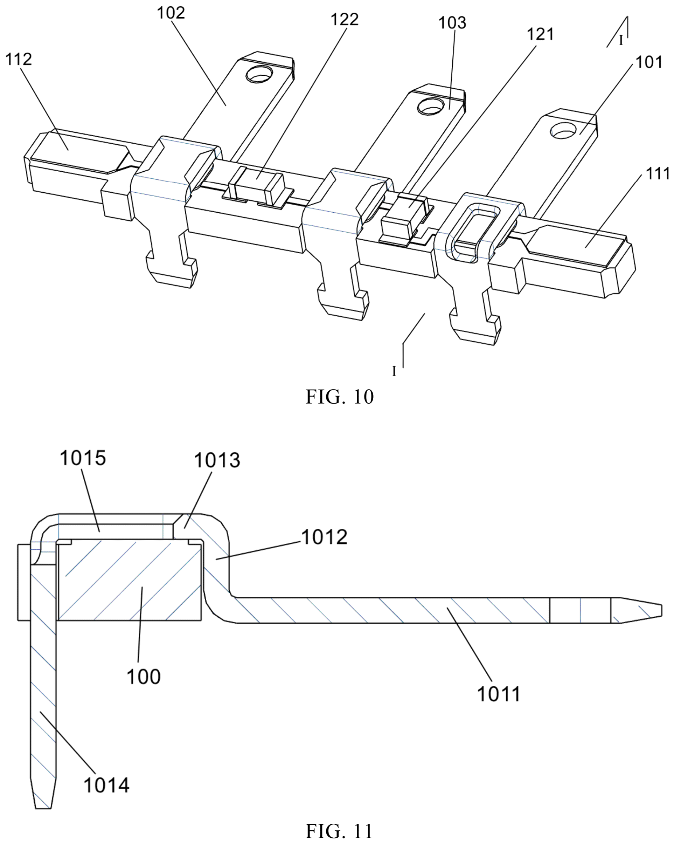

Fig. 7 illustrates a perspective view of the printed circuit board 10 of the pressure sensor 1 according to one embodiment of the invention, showing the structure of the printed circuit board 10 in more detail. Fig. 8 illustrates a perspective view of the printed circuit board body 110 of the printed circuit board 10 of the pressure sensor 1 according to one embodiment of the present invention. Fig. 9 illustrates a perspective view of one terminal 101 of the printed circuit board 10 of the pressure sensor 1 according to one embodiment of the present invention. Fig. 10 illustrates a perspective view of the printed circuit board 10 of the pressure sensor 1 according to another embodiment of the present invention.

The printed circuit board 10 includes a printed circuit board body 110 having a substantially rectangular shape elongated in a length direction. As shown in fig. 8, the printed circuit board body 110 includes a first ear portion 111 and a second ear portion 112 at two ends thereof. The first and second ear portions 111, 112 are electrically connected to first and second contacts 113, 113', respectively, wherein the first and second contacts 113, 113' are configured to be electrically connected to the first and second terminals 101, 102, respectively. A third contact 113" is also provided between the first contact 113 and the second contact 113', said third contact 113" being able to be connected to a third terminal 103 which is a ground terminal. In one embodiment of the application, the third terminal 103 may be omitted. That is, in one embodiment of the present application, the printed circuit board 10 includes a first terminal 101 and a second terminal 102. It will be readily appreciated by those skilled in the art that a greater or lesser number of contacts and corresponding terminals can be provided.

In one embodiment of the invention, between the first contact 113 and the third contact 113", a first solder joint 114 and a second solder joint 115 are extending from the first contact 113 and the third contact 113" respectively, and said first solder joint 114 and second solder joint 115 are electrically connected to the first contact 113 and the third contact 113" respectively, said first solder joint 114 and second solder joint 115 being close to each other but not electrically connected. In one embodiment of the present invention, as shown in fig. 10, the first solder joint 114 and the second solder joint 115 are used for SMT soldering or surface-mounted with two pins of the SMD capacitor 121, respectively. In one embodiment of the invention, between the second contact 113' and the third contact 113", a third solder joint 114' and a fourth solder joint 115' are extending from the second contact 113' and the third contact 113" respectively, and the third solder joint 114' and the fourth solder joint 115' are electrically connected to the second contact 113' and the third contact 113" respectively, the third solder joint 114' and the fourth solder joint 115' being close to each other but not electrically connected. In one embodiment of the present invention, as shown in fig. 10, a third solder joint 114' and a fourth solder joint 115' are used for SMT soldering or surface-mounted with two pins of the SMD capacitor 122, respectively. That is, in fig. 10, the SMD capacitors 121 and 122 directly SMT soldered or surface-mounted to the printed circuit board body 100, which results in a very compact printed circuit board 10, thereby contributing to the realization of the signal output of the pressure sensor 1.

In the embodiment of the present invention, as shown in fig. 8, the printed circuit board 10 has an elongated structure, and can reduce the size of the printed circuit board body 110 from a width of about 14.2 mm and a length of about 35.2 mm to a width of about 3.6 mm and a length of about 29.8 mm, thereby greatly reducing the size of the printed circuit board body 110, thus significantly reducing the cost and saving the space for the pressure sensor. For example, the size of the printed circuit board body 100 is reduced to about 21.5% compared to the original printed circuit board body. In addition, The terminals 101-103 can also be significantly reduced in size, for example from a width of about 8.7 mm and a length of about 19.2 mm to a width of about 2.8 mm and a length of about 18.39 mm, with each terminal 101-103 being reduced in size to about 31% of its original terminal, thus significantly reducing the cost and saving the space for the pressure sensor.

In the embodiment of fig. 7, the printed circuit board 10 does not employ a solution of directly SMT soldering the SMD capacitors 121 and 122 to the first and second solder joints 114 and 115 and the third and fourth solder joints 114' and 115', but employs a solution of interposing the plug-in capacitors 121 and 122. That is, in the embodiment of fig. 7, the first and second solder joints 114 and 115 are electrically disconnected from each other and the third and fourth solder joints 114' and 115' are disconnected from each other. Capacitors 121 and 122 are plug-in capacitors, which may have a lower cost than SMD capacitors.

Fig. 9 illustrates a perspective view of one terminal 101 of the printed circuit board 10 of the pressure sensor 1 according to one embodiment of the present application. The terminal 101 has a structure of a substantially "Ω" or a serpentine shape, including a relatively long horizontally extending terminal output portion 1011, a vertical transition portion 1012, a horizontally extending terminal connection portion 1013 at the maximum height, and a terminal mounting portion 1014 extending vertically downward from one end of the terminal connection portion 1013. It should be understood that in the present application, the "serpentine shape" is not limited to the shape shown in figs. 9 and 12 to 13, and other similar shapes that facilitate the connection of the terminal 101 to the printed circuit board body 100 are also included, as long as they can achieve the object or principle of the present application. Optionally, a through portion 1016 is provided near the free end of the terminal output portion 1011. The through portion 1016 facilitates, for example, electrical connection and also contributes to cost reduction because the amount of material used for the terminal 101 is reduced. In an embodiment of the present application, a through hole 1015 is provided at the terminal connection portion 1013, and the through hole 1015 extends through the terminal connection portion 1013 and extends through a portion of the terminal mounting portion 1014. As shown in fig. 7, the pin 1221 of the plug-in capacitor 122 is disposed in the through hole 1015 of the first terminal 101. The pins 1221 are inserted into the through holes 1015 from the terminal mounting portion 1014 and then fixed to the first contact 113 of the printed circuit board body 100 by soldering. That is, the plug-in capacitor 122 and the first terminal 101 are simultaneously soldered to the first contact 113 of the printed circuit board body 100 in one soldering process and electrically connected to each other. Preferably, the pins 1221 of the plug-in capacitors 122 extend from the terminal mounting portion 1014 into the through hole 1015. In fig. 7, it is shown in the position where the first terminal 101 and the pin 1221 are located that, the first terminal 101 and the pin 1221 are not soldered yet. After soldering, neither the pin 1221 nor the solder extends beyond the maximum height of the first terminal 101, that is, the height of the terminal connecting portion 1013, and this corresponds to a state in the position where the second terminal 102 and the third terminal 103 are located. The printed circuit board 10 thus designed is more compact in construction, has good versatility and adaptability, significantly reduces process costs and has improved reliability. In an alternative embodiment, the terminal mounting portion 1014 is provided with a narrowing portion 1017, and the narrowing portion 1017 is able to be received in a complementary shaped lateral projection (not shown) of the mounting seat 510 when mounted, thereby facilitating a more secure fixing of the printed circuit board 10 and the terminal 101 on the housing 2 of the pressure sensor 1. The terminal of the embodiment shown in fig. 9 can be used in the printed circuit board 10 including the SMD capacitor as shown in fig. 10, and can also be used in the printed circuit board 10 including the plug-in capacitor as shown in fig. 7.

As shown in fig. 8, the printed circuit board body 100 further includes a groove 116 on a lateral side, and the groove 116 is used for receiving a terminal mounting portion 1014 of the terminal 101. Fig. 11 illustrates a cross-sectional view of the printed circuit board 10 of the pressure sensor 1 according to another embodiment of the invention along the line I-I. As shown in fig. 11, the "Ω" or serpentine shaped portion of the terminal 101 is snapped onto the printed circuit board body 100, and the horizontal distance between the terminal mounting portion 1014 and the vertical transition portion 1012 of the terminal 101 is slightly larger than the transverse width of the printed circuit board body 100 at the groove 116, so as to prevent the terminal 101 from moving in the transverse direction relative to the printed circuit board body 100, and the groove 116 is also prevents the terminal 101 from moving in the length direction relative to the printed circuit board body 100, which helps to further improve the connection stability and reliability of the printed circuit board 10.

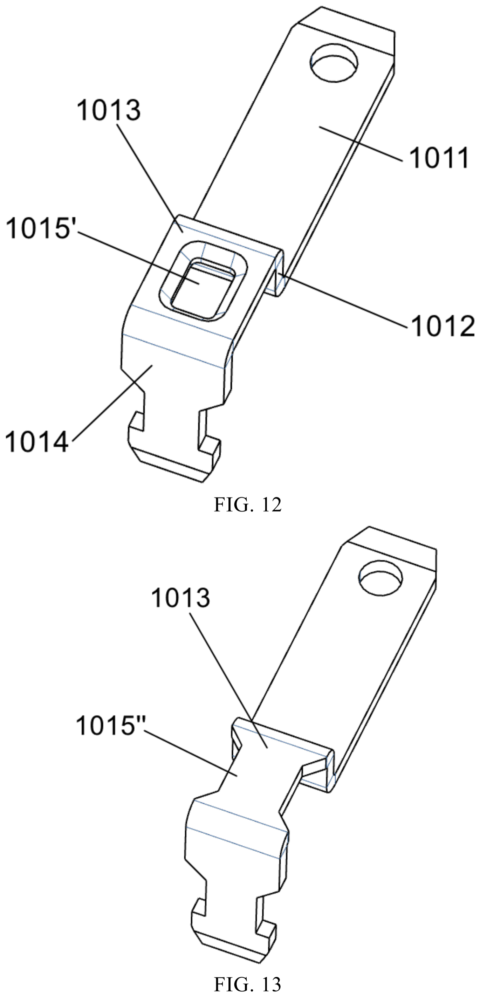

Fig. 12 illustrates a perspective view of an alternative terminal of the printed circuit board 10 of the pressure sensor 1 according to another embodiment of the present invention. The terminal of fig. 12 has substantially the same geometry as the terminal 101 shown in fig. 9, i.e., has a structure of a substantially "Ω" or serpentine shape, including a relatively long horizontally extending terminal output portion 1011, a vertical transition portion 1012, a horizontally extending terminal connection portion 1013 at the maximum height, and a terminal mounting portion 1014 extending vertically downward from one end of the terminal connection portion 1013. In the embodiment of fig. 12, the terminal has a smaller through hole 1015' at the terminal connecting portion 1013, and the through hole 1015' extends through the terminal connecting portion 1013 only and not through any portion of the terminal mounting portion 1014, so as to facilitate soldering the terminal 101 to the printed circuit board body 100.

Fig. 13 illustrates a perspective view of an alternative terminal of the printed circuit board 10 of the pressure sensor 1 according to a further embodiment of the invention. In the embodiment of fig. 12, the terminal has a narrowed portion 1015" at the terminal connection portion 1013, and the narrowed portion 1015" is narrower than the first contact 113 of the printed circuit board body 100, so that the terminal can be soldered at both sides at the narrowed portions 1015" onto the first contact 113 to electrically connect the terminal to the printed circuit board body 100 of the printed circuit board 10. Alternative terminals in the embodiment of figs. 12 and 13 are preferably used in a printed circuit board 10 including a SMD capacitor as shown in fig. 10.

In an embodiment of the invention, the printed circuit board body 100 has a plurality of solder joints 114, 115, 114', 115' capable of SMT soldering a SMD capacitor, and a plurality of contacts 113, 113', 113" capable of plug-in soldering a plug-in capacitor, and the contacts 113, 113', 113" at the same time are also capable of being used for soldering the terminals 101, 102, 103. Therefore, the printed circuit board 10 according to the embodiment of the present invention adopts a compatible design, so that a solution of adopting a SMD capacitor or an alternative solution of adopting an plug-in capacitor can be selected as needed, and the printed circuit board 10 has good versatility, and the size of the printed circuit board 10 can be reduced, and the cost of the pressure sensor 1 can be reduced, and thus the pressure sensor 1 has improved assemblability and good compatibility. It will also be appreciated that the printed circuit board body 100 can be provided with the plurality of solder joints 114, 115, 114', 115' and the plurality of contacts 113, 113', 113" on the same surface, such that the capacitors and the terminals are electrically connected to the printed circuit board body 100 on the same surface. It is also possible that the printed circuit board body 100 can be provided with a plurality of solder joints 114, 115, 114', 115' on one surface for surface mounting the SMD capacitors 121 and a plurality of contacts 113, 113', 113" on the opposite surface for soldering the terminals 101, 102, 103 on said opposite surface.

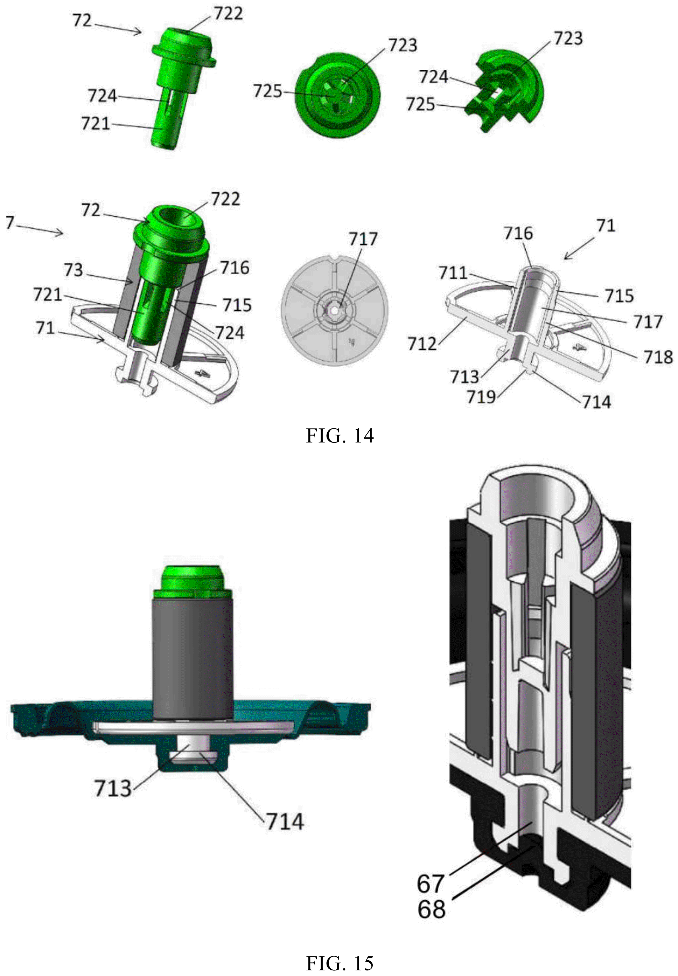

Fig. 14 illustrates perspective views, sectional views, plan views of the individual components of the magnetic core assembly 7 of the pressure sensor 1 according to one embodiment of the invention. The magnetic core assembly 7 has a magnetic core holder 71, a magnetic core cap 72 and a magnetic core 73. The magnetic core cap 72 has a multi-stage cylindrical shape, and the magnetic core cap 72 has a lower section 721 at a lower side. The center of the magnetic core cap 72 is configured with an center hole 722 opening upwardly, and the center hole 722 is configured with one or more glue flowing grooves 723 in the inner circumferential wall thereof, and the glue flowing grooves 723 extend in the axial direction A to the damming portion 725 in said lower section 721. The glue flowing grooves 723 have radial openings 724, respectively, through which the central hole 722 communicates with the outside of the magnetic core cap 72.

The magnetic core holder 71 has an intermediate sleeve 711, a supporting disc 712 and a coupling sleeve 713 which are coaxially formed. The supporting disc 712 being formed between the intermediate sleeve 711 and the coupling sleeve 713. The center of the intermediate sleeve 711 is formed with a receiving portion 717, into which a lower section 721 of the magnetic core cap 72 can be inserted. The intermediate sleeve 711 has a sleeve end 716 that is axially remote from the supporting disc 712. There is a gap axially between the sleeve end 716 and the magnetic core cap 72. The intermediate sleeve 711 is configured with an indented portion 715 on the outer peripheral wall of the intermediate sleeve 711 near the sleeve end 716, and the main sleeve section 718 of the intermediate sleeve 711 is positioned below the indented portion 715. The outer diameter of the indented portion 715 is smaller than the outer diameter of the main sleeve section 718 and the inner diameter of the cylindrical magnetic core 73. The coupling sleeve 713 is a cylindrical member extending from the supporting disc 712 to one end opposite to the intermediate sleeve 711, and the coupling sleeve 713 has a shoulder 714 that protrudes radially outward from the lower end of the cylindrical portion of the coupling sleeve 713. The supporting disc 712 is in the form of a flat disc, and in the mounted state, the lower surface of the supporting disc 712 is in contact with the upper surface of the central disc 66 of the pressure sensing part 6 and is supported on this central disc 66.

In the assembled state, the lower section 721 of the magnetic core cap 72 of the magnetic core assembly 7 is inserted into the receiving portion 717 of the magnetic core holder 71, and the magnetic core 73 is fitted over the outside of the magnetic core cap 72 and the magnetic core holder 71. In a preferred embodiment, the magnetic core 73 is fixedly attached by an interference fit with respect to the magnetic core cap 72 and the magnetic core holder 71. The outer diameter of the lower section 721 of the magnetic core cap 72 is smaller than the inner diameter of the receiving portion 717 of the magnetic core print 71, so that a glue storing gap is formed between the lower section 721 of the magnetic core cap 72 and the receiving portion 717 of the magnetic core holder 71.

When the glue is dispensed in the assembled state, the glue is poured into the central hole 722 of the magnetic core cap 72, flows down to the damming portion 725 through the glue flowing groove 723 and flows out through the radial opening 724 to reach the glue storing gap between the lower section 721 of the magnetic core cap 72 and the receiving portion 717 of the magnetic core holder 71. Furthermore, a part of the glue bypasses from above the sleeve end 716 of the magnetic core holder to reach the gap between the indented portion 715 and the magnetic core 73. After the glue is solidified, the magnetic core holder 71, the magnetic core cap 72 and the magnetic core 73 can be firmly secured with each other.

By means of the groove forming design and the size matching of the magnetic core assembly, the glue can be simply and quickly dispensed in the assembling process, the accuracy of the dispensing position is ensured, the amount of the glue dispensed can be adjusted in a large range, and the glue can be adapted to the glue with different physical properties.

FIG. 15 illustrates a cross-sectional view and a partially enlarged cross-sectional view of a magnetic core assembly and a pressure sensing component of a pressure sensor in accordance with one embodiment of the present invention. As shown in fig. 15, in the preferred embodiment of the present invention, the carrier 62 of the pressure sensing part 6 is provided with a recess 67 at the center thereof, and a projection 68 is provided at the center of the recess 67. In the mounted state, the coupling sleeve 713 of the magnetic core holder 71 together with the shoulder 714 is mounted in the recess 67 of the carrier 62 of the pressure sensing part 6, and the projection 68 of the carrier 62 of the pressure sensing part 6 is inserted in the centering hole 719 in the center of the bottom of the shoulder 714, so as to realize a centered positioning of the magnetic core holder 71 relative to the pressure sensing part 6. In an alternative or additional embodiment, the magnetic core holder 71 is provided with a fastening buckle (not shown) for connecting with the pressure sensing component 6.

When mounting, it is only necessary to appropriately pull the recess 67 of the pressure sensing part 6 open, and then insert the coupling sleeve 713 of the magnetic core holder 71 together with the shoulder 714 into the recess 67, and then release the pressure sensing part 6 to firmly wrap the coupling sleeve 713 of the magnetic core holder by means of the elastic restoring force of the pressure sensing part 6 itself.

The matching structure not only ensures that the pressure sensing part 6 is tightly attached to the bottom plane of the magnetic core holder 71, but also improves the response speed of the magnetic core to the deformation of the pressure sensing part 6 and simplifies the mounting operation at the same time. The whole mounting process does not need extra fixing measures, and the stable connection can be realized only by the elasticity of the pressure sensing component 6, so that the influence of the assembly process on the product performance is effectively reduced.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited, because other modifications will become apparent upon a study of the drawings, the specification, and the following claims. For example, unless specifically stated otherwise, the size, shape, location or orientation of the various components may be changed as needed and/or desired, as long as such changes do not substantially affect their intended function.

Certain embodiments of the invention are described in the following clauses:
Clause 1. A pressure sensor, characterized in that, the pressure sensor comprises:
   a housing (2) which comprises a first air cap (5) and a second air cap (4) mounted to each other;
   a pressure sensing part (6) which is clamped between the first air cap (5) and the second air cap (4), and a chamber between the first air cap (5) and the second air cap (4) is divided into an upper chamber (21) and a lower chamber (22) by the pressure sensing part (6);
   a magnetic core assembly (7) which is carried above the pressure sensing part (6), and the magnetic core assembly (7) moves relative to the housing (2) based on the deformation of the pressure sensing part (6);
   a coil (8) which is arranged coaxially with said housing (2), and the inductance of said coil (8) varies when the magnetic core assembly (7) moves relative to said housing (2); and
   a printed circuit board (10) which is mounted on the first air cap (5), and both ends of the coil (8) are electrically connected to the printed circuit board (10), and the printed circuit board (10) outputs a signal according to a change in inductance of the coil (8), and the printed circuit board (10) has a plurality of solder joints (114, 115, 114', 115') capable of surface mounting a capacitor and a plurality of contacts (113, 113', 113") capable of electrically connecting with both a terminal and a capacitor.
Clause 2. The pressure sensor according to clause 1, characterized in that, the printed circuit board (10) comprises two capacitors (121, 122) forming part of an oscillating circuit and terminals (101, 102, 103), and the terminals (101, 102, 103) are used for outputting signals.
Clause 3. The pressure sensor according to clause 2, characterized in that, the printed circuit board (10) includes a printed circuit board body (100) extending in a length direction, and the printed circuit board body (100) includes first and second ear portions (111, 112) at both ends, and the first and second ear portions (111, 112) are electrically connected to the coil (8) respectively.
Clause 4. The pressure sensor according to clause 3, characterized in that, the printed circuit board body (100) comprises a first contact (113) and a second contact (113') electrically connected to the first ear portion (111) and the second ear portion (112) respectively, and a third contact (113") which is located between the first contact (113) and the second contact (113'), and a first solder joint (114) and a second solder joint (115) extend from the first contact (113) and the third contact (113") respectively towards each other but are not electrically connected, and a third solder joint (114') and a fourth solder joint (115') extend from the second contact (113') and the third contact (113") respectively towards each other but are not electrically connected.
Clause 5. The pressure sensor according to clause 4, characterized in that, the first solder joint (114) and the second solder joint (115) are SMT soldered to two pins of the SMD capacitor (121) respectively, and the third solder joint (114') and the fourth solder joint (115') are SMT soldered to two pins of the SMD capacitor (122) respectively.
Clause 6. The pressure sensor according to clause 3, characterized in that, each terminal (101, 102, 103) has a structure in serpentine shape including a relatively long horizontally extending terminal output portion (1011), a vertical transition portion (1012), a horizontally extending terminal connecting portion (1013) at the maximum height, and a terminal mounting portion (1014) extending vertically downward from one end of the terminal connecting portion (1013).
Clause 7. The pressure sensor according to clause 6, characterized in that, the printed circuit board body (100) further comprises a groove (116) on a lateral side, and the groove (116) is used for receiving a terminal mounting portion (1014) of the terminal (101).
Clause 8. The pressure sensor according to clause 7, characterized in that, a horizontal distance between the terminal mounting portion (1014) and a vertical transition portion (1012) of the terminal (101) is slightly larger than a lateral width of the printed circuit board body (100) at the groove (116).
Clause 9. The pressure sensor according to clause 6 or 7, characterized in that, a through hole (1015) is provided at the terminal connection portion (1013), and the through hole (1015) extends through the terminal connection portion (1013) and through a portion of the terminal mounting portion (1014), and the terminal is capable of receiving a pin (1221) of the capacitor at the through hole (1015) and being soldered together with the pin to a contact (113, 113', 113") of the printed circuit board body (100).
Clause 10. The pressure sensor according to clause 6 or 7, characterized in that, a mounting seat (510) is provided on the first air cap (5) for mounting the printed circuit board (10) thereon, and the terminal mounting portion (1014) is provided with a narrowing portion (1017), and the narrowing portion (1017) is able to be received in a complementary shaped lateral projection of the mounting seat (510).
Clause 11. The pressure sensor according to clause 10, characterized in that, the mounting seat (510) includes a wall portion (511) and a catching mechanism (512) extending vertically upward from an upper surface thereof and disposed opposite to each other, and a distance between the wall portion (511) and the catching mechanism (512) is slightly larger than a width of the printed circuit board body (110).
Clause 12. The pressure sensor according to clause 11, characterized in that, the catching mechanism (512) is provided at its upper end with a catching portion (513) projecting towards the wall portion (511).
Clause 13. The pressure sensor according to clause 3, characterized in that, the printed circuit board (10) comprises a first terminal (101) and a second terminal (102) electrically connected to the first ear portion (111) and the second ear portion (112) respectively; or
   the printed circuit board (10) includes a first terminal (101) and a second terminal (102) electrically connected to the first ear portion (111) and the second ear portion (112) respectively, and further includes a third terminal (103) which is located between the first terminal (101) and the second terminal (102), and the third terminal (103) serves as a ground terminal.
Clause 14. The pressure sensor according to any of clauses 1 to 5, characterized in that, the plurality of solder joints (114, 115, 114', 115') and a plurality of contacts (113, 113', 113") are provided on the same surface of the printed circuit board (10); or
   the plurality of solder joints (114, 115, 114', 115') are disposed on one surface of the printed circuit board (10), and the plurality of contacts (113, 113', 113") are disposed on an opposite surface of the printed circuit board (10).
Clause 15. The pressure sensor according to any of clauses 1 to 5, characterized in that, the magnetic core assembly (7) includes:
   a magnetic core holder (71), and the magnetic core holder (71) includes a supporting disc (712) and an intermediate sleeve (711) extending axially from the supporting disc (712), and the center of the intermediate sleeve (711) is configured with a receiving portion (717), and the intermediate sleeve (711) includes a sleeve end (716) at an end distal from the supporting disc (712), and the intermediate sleeve (711) is configured with an indented portion (715) at an outer peripheral wall of the intermediate sleeve (711) near the sleeve end (716);
   a magnetic core cap (72), and the magnetic core cap (72) has a lower section (721) at the lower side, and the lower section (721) is inserted into the receiving portion (717), and the center of the magnetic core cap (72) is configured with a central hole (722) opening upwards, and the inner peripheral wall of the central hole (722) is configured with a glue flowing groove (723) extending axially, and the glue flowing groove (723) has a radial opening (724), and the central hole (722) is in communication with the outer side of the magnetic core cap (72) via the radial opening (724); and
   a magnetic core (73), and the magnetic core (73) is fitted over the outside of said magnetic core cap (72) and said magnetic core holder (71);
   wherein a radial gap is formed between the lower section (721) and the receiving portion (717), and a gap is formed between the sleeve end (716) and the magnetic core cap (72) in the axial direction, and a radial gap is formed between the indented portion (715) and the magnetic core (73).
Clause 16. The pressure sensor according to clause 15, characterized in that, the core holder (71) further includes a coupling sleeve (713);
   wherein the center of the pressure sensing part (6) is configured with a carrier (62), and the center of the carrier (62) is configured with a recess (67) opening upwards, and the carrier (62) is resilient;
   wherein the coupling sleeve (713) has a radially outwardly projecting shoulder (714) at the lower end, and the coupling sleeve (713) together with the shoulder (714) is mounted in the recess (67) in a form-fitting manner, and the supporting disc (712) is supported on the carrier (62).
Clause 17. The pressure sensor according to clause 16, characterized in that, a projection (68) is provided in the centre of the recess (67), and the projection (68) is inserted in a centering hole (719) in the centre of the bottom of the shoulder (714).

## Claims

1. A pressure sensor, **characterized in that**, the pressure sensor comprises:
a housing (2) which comprises a first air cap (5) and a second air cap (4) mounted to each other;
a pressure sensing part (6) which is clamped between the first air cap (5) and the second air cap (4), and a chamber between the first air cap (5) and the second air cap (4) is divided into an upper chamber (21) and a lower chamber (22) by the pressure sensing part (6);
a magnetic core assembly (7) which is carried above the pressure sensing part (6), and the magnetic core assembly (7) moves relative to the housing (2) based on the deformation of the pressure sensing part (6);
a coil (8) which is arranged coaxially with said housing (2), and the inductance of said coil (8) varies when the magnetic core assembly (7) moves relative to said housing (2); and
a printed circuit board (10) which is mounted on the first air cap (5), and both ends of the coil (8) are electrically connected to the printed circuit board (10), and the printed circuit board (10) outputs a signal according to a change in inductance of the coil (8), and the printed circuit board (10) has a plurality of solder joints (114, 115, 114', 115') capable of surface mounting a capacitor and a plurality of contacts (113, 113', 113") capable of electrically connecting with both a terminal and a capacitor.

2. The pressure sensor according to claim 1, **characterized in that**, the printed circuit board (10) comprises two capacitors (121, 122) forming part of an oscillating circuit and terminals (101, 102, 103), and the terminals (101, 102, 103) are used for outputting signals.

3. The pressure sensor according to claim 2, **characterized in that**, the printed circuit board (10) includes a printed circuit board body (100) extending in a length direction, and the printed circuit board body (100) includes first and second ear portions (111, 112) at both ends, and the first and second ear portions (111, 112) are electrically connected to the coil (8) respectively.

4. The pressure sensor according to claim 3, **characterized in that**, the printed circuit board body (100) comprises a first contact (113) and a second contact (113') electrically connected to the first ear portion (111) and the second ear portion (112) respectively, and a third contact (113") which is located between the first contact (113) and the second contact (113'), and a first solder joint (114) and a second solder joint (115) extend from the first contact (113) and the third contact (113") respectively towards each other but are not electrically connected, and a third solder joint (114') and a fourth solder joint (115') extend from the second contact (113') and the third contact (113") respectively towards each other but are not electrically connected.

5. The pressure sensor according to claim 4, **characterized in that**, the first solder joint (114) and the second solder joint (115) are SMT soldered to two pins of the SMD capacitor (121) respectively, and the third solder joint (114') and the fourth solder joint (115') are SMT soldered to two pins of the SMD capacitor (122) respectively.

6. The pressure sensor according to claim 3, **characterized in that**, each terminal (101, 102, 103) has a structure in serpentine shape including a relatively long horizontally extending terminal output portion (1011), a vertical transition portion (1012), a horizontally extending terminal connecting portion (1013) at the maximum height, and a terminal mounting portion (1014) extending vertically downward from one end of the terminal connecting portion (1013).

7. The pressure sensor according to claim 6, **characterized in that**, the printed circuit board body (100) further comprises a groove (116) on a lateral side, and the groove (116) is used for receiving a terminal mounting portion (1014) of the terminal (101).

8. The pressure sensor according to claim 7, **characterized in that**, a horizontal distance between the terminal mounting portion (1014) and a vertical transition portion (1012) of the terminal (101) is slightly larger than a lateral width of the printed circuit board body (100) at the groove (116).

9. The pressure sensor according to claim 6 or 7, **characterized in that**, a through hole (1015) is provided at the terminal connection portion (1013), and the through hole (1015) extends through the terminal connection portion (1013) and through a portion of the terminal mounting portion (1014), and the terminal is capable of receiving a pin (1221) of the capacitor at the through hole (1015) and being soldered together with the pin to a contact (113, 113', 113") of the printed circuit board body (100).

10. The pressure sensor according to claim 6 or 7, **characterized in that**, a mounting seat (510) is provided on the first air cap (5) for mounting the printed circuit board (10) thereon, and the terminal mounting portion (1014) is provided with a narrowing portion (1017), and the narrowing portion (1017) is able to be received in a complementary shaped lateral projection of the mounting seat (510).

11. The pressure sensor according to claim 10, **characterized in that**, the mounting seat (510) includes a wall portion (511) and a catching mechanism (512) extending vertically upward from an upper surface thereof and disposed opposite to each other, and a distance between the wall portion (511) and the catching mechanism (512) is slightly larger than a width of the printed circuit board body (110), and optionally
wherein the catching mechanism (512) is provided at its upper end with a catching portion (513) projecting towards the wall portion (511).

12. The pressure sensor according to claim 3, **characterized in that**, the printed circuit board (10) comprises a first terminal (101) and a second terminal (102) electrically connected to the first ear portion (111) and the second ear portion (112) respectively; or
the printed circuit board (10) includes a first terminal (101) and a second terminal (102) electrically connected to the first ear portion (111) and the second ear portion (112) respectively, and further includes a third terminal (103) which is located between the first terminal (101) and the second terminal (102), and the third terminal (103) serves as a ground terminal.

13. The pressure sensor according to any of claims 1 to 5, **characterized in that**, the plurality of solder joints (114, 115, 114', 115') and a plurality of contacts (113, 113', 113") are provided on the same surface of the printed circuit board (10); or
the plurality of solder joints (114, 115, 114', 115') are disposed on one surface of the printed circuit board (10), and the plurality of contacts (113, 113', 113") are disposed on an opposite surface of the printed circuit board (10).

14. The pressure sensor according to any of claims 1 to 5, **characterized in that**, the magnetic core assembly (7) includes:
a magnetic core holder (71), and the magnetic core holder (71) includes a supporting disc (712) and an intermediate sleeve (711) extending axially from the supporting disc (712), and the center of the intermediate sleeve (711) is configured with a receiving portion (717), and the intermediate sleeve (711) includes a sleeve end (716) at an end distal from the supporting disc (712), and the intermediate sleeve (711) is configured with an indented portion (715) at an outer peripheral wall of the intermediate sleeve (711) near the sleeve end (716);
a magnetic core cap (72), and the magnetic core cap (72) has a lower section (721) at the lower side, and the lower section (721) is inserted into the receiving portion (717), and the center of the magnetic core cap (72) is configured with a central hole (722) opening upwards, and the inner peripheral wall of the central hole (722) is configured with a glue flowing groove (723) extending axially, and the glue flowing groove (723) has a radial opening (724), and the central hole (722) is in communication with the outer side of the magnetic core cap (72) via the radial opening (724); and
a magnetic core (73), and the magnetic core (73) is fitted over the outside of said magnetic core cap (72) and said magnetic core holder (71);
wherein a radial gap is formed between the lower section (721) and the receiving portion (717), and a gap is formed between the sleeve end (716) and the magnetic core cap (72) in the axial direction, and a radial gap is formed between the indented portion (715) and the magnetic core (73).

15. The pressure sensor according to claim 14, **characterized in that**, the core holder (71) further includes a coupling sleeve (713);
wherein the center of the pressure sensing part (6) is configured with a carrier (62), and the center of the carrier (62) is configured with a recess (67) opening upwards, and the carrier (62) is resilient;
wherein the coupling sleeve (713) has a radially outwardly projecting shoulder (714) at the lower end, and the coupling sleeve (713) together with the shoulder (714) is mounted in the recess (67) in a form-fitting manner, and the supporting disc (712) is supported on the carrier (62), and optionally
wherein a projection (68) is provided in the centre of the recess (67), and the projection (68) is inserted in a centering hole (719) in the centre of the bottom of the shoulder (714).
